# EUROPEAN PATENT APPLICATION

(11) **EP 3 335 849 A1**
(43) Date of publication of application: **20.06.2018**
(21) Application number: 16834609.6
(22) Date of filing: 05.08.2016
(51) Int. Cl.: B29C 33/30, B29C 35/02

(54) **RAPID MOULD-LOCKING DEVICE**

(30) Priority: 12.08.2015 CN 201510493765
(71) Applicant: Sino-Arp Tires Equipment Technology (Shouzhou) Co. Ltd., Jiangsu 215000 (CN)
(72) Inventor: ZHANG, Zhengluo, Suzhou Jiangsu 215000 (CN)
(74) Representative: KNH Patentanwälte Neumann Heine Taruttis PartG mbB
(86) International application number: PCT/CN2016/093398
(87) International publication number: WO 2017/024985

(57) **Abstract**

The present invention discloses a quick mold clamping device, including a base and a cross beam, wherein a first hot plate, a lower mold, an upper mold and a second hot plate are arranged successively between the base and the cross beam; the lower mold is connected with the first hot plate, and the upper mold is connected with the second hot plate, both by connecting pieces; the upper and lower molds are buckled to form a cavity; the connecting pieces include substrates and U-shaped plates connected with the substrates; the upper and lower molds are connected with the connecting pieces through the U-shaped plates; and the first and second hot plates are both provided with grooves, and the substrates are clamped in the grooves. According to the quick mold clamping device of the present invention, the upper and lower molds are arranged between the first and second hot plates, the hot plates can be connected with the upper and lower molds in a simple insertion manner, and specifically, the first and second hot plates are connected with the upper and lower molds through the grooves and the connecting pieces to drive the mold to realize tire vulcanization. The operation is simple, and the working efficiency is high.

## Description

### Field of the Invention

The present invention relates to a device, in particular to a quick mold clamping device.

### Background of the Invention

An existing mold used during tire vulcanization includes upper and lower molds which are buckled to form a cavity, a tire is placed in the cavity, then a hot plate is connected with the upper and lower molds via screws to form a mold, the tire in the cavity is vulcanized by the heating of the hot plate, this mold cannot be easily disassembled after being connected with the hot plate via the screws, so that the tire vulcanization operation is cumbersome, and the working efficiency is low.

### Summary of the Invention

In order to solve the above technical problems, the objective of the present invention is to provide a quick mold clamping device, so that a mold for tire vulcanization can be assembled in a simple insertion manner, the mold is convenient to disassemble, the operation is simple, and the working efficiency is high.

In order to achieve the above objective, the technical solution of the present invention is as follows:
The present invention provides a quick mold clamping device, including a base and a cross beam, wherein a first hot plate, a lower mold, an upper mold and a second hot plate are arranged successively between the base and the cross beam; the lower mold is connected with the first hot plate, and the upper mold is connected with the second hot plate, both by connecting pieces; the connecting pieces include substrates and U-shaped plates connected with the substrates; the upper and lower molds are connected with the connecting pieces through the U-shaped plates; and the first and second hot plates are both provided with grooves, in which the substrates are clamped.

According to the quick mold clamping device of the present invention, the upper and lower molds are arranged between the first and second hot plates, the hot plates can be connected with the upper and lower molds in a simple insertion manner, and specifically, the first and second hot plates are connected with the upper and lower molds through the grooves and the connecting pieces to drive the mold to realize tire vulcanization. The operation is simple, and the working efficiency is high.

On the basis of the above-mentioned technical solution, the present invention can also be improved as follows:
As a preferred solution, the first grooves are T-shaped grooves, the T-shaped grooves include first connecting grooves at the bottom, and second connecting grooves communicated with the first connecting grooves are formed in the first connecting grooves.

By adoption of the above-mentioned preferred solution, since the first grooves are the T-shaped grooves, the connecting pieces are easy to install, and connecting plates are clamped in the second connecting grooves after clamping, thereby ensuring easy installation and also firm connection.

As a preferred solution, projections or slots matched with the structures of the U-shaped plates are arranged on the upper and lower molds, and the projections are clamped in the U-shaped plates or the U-shaped plates are clamped in the first slots.

By adoption of the above-mentioned preferred solution, a suitable manner can be selected according to need to connect the upper and lower molds with the U-shaped plates, and the upper and lower molds are firmly connected with the U-shaped plates by the structures matched with the U-shaped plates.

As a preferred solution, the projections include first connecting surfaces and second connecting surfaces arranged below the first connecting surfaces, the U-shaped plates include first connecting edges and second connecting edges, the first connecting edges are arranged above the first connecting surfaces, and the second connecting edges are arranged below the second connecting surfaces.

As a preferred solution, the first connecting surfaces are obliquely arranged.

By adoption of the above-mentioned preferred solution, since the first connecting surfaces are obliquely arranged to facilitate entrance of the U-shaped plates, the installation and disassembly are easier.

As a preferred solution, second grooves are further formed in the upper and lower molds, and the second grooves are arranged above the projections and are connected with the projections through the first connecting surfaces.

By adoption of the above-mentioned preferred solution, as the second grooves are formed, when the clamping positions of the U-shaped plates are invariable, the first connecting edges enter the second grooves, so that the same U-shaped plates can adapt to the molds with greater diameter.

As a preferred solution, the connecting edges in the second grooves connected with the first connecting surfaces are obliquely arranged.

By adoption of the above-mentioned preferred solution, as the connecting edges connected with the first connecting surfaces are obliquely arranged, the first connecting edges can be inserted into the second grooves easily, the installation and disassembly are easier.

As a preferred solution, second slots are formed in the second connecting edges.

By adoption of the above-mentioned preferred solution, as the second slots are formed in the second connecting edges, a driving device can be conveniently clamped with the second slots when being installed, so that the connection is firmer.

As a preferred solution, the second grooves and the projections are integrally arranged.

By adoption of the above-mentioned preferred solution, by means of the arrangement, the structure is simpler to meet the requirement of molds with different sizes.

As a preferred solution, connecting plates are further arranged between the substrates and the U-shaped plates.

By adoption of the above-mentioned preferred solution, due to the arrangement of the connecting plates, fasteners can be installed conveniently, so that the whole structure is firmer.

As a preferred solution, a first thermal insulation pad is further arranged between the first hot plate and the base, and a second thermal insulation pad is further arranged between the second hot plate and the cross beam.

By adoption of the above-mentioned preferred solution, due to the arrangement of the thermal insulation pads, the outward conduction of the heat of the hot plates is avoided, and the heat is basically used for heating the mold.

### Brief Description of the Drawings

Fig. 1 is a front view of a quick mold clamping device of the present invention;
Fig. 2 is a first structural schematic diagram of a connection with a connecting piece when a projection is arranged on a lower mold of the quick mold clamping device of the present invention;
Fig. 3 is a second structural schematic diagram of a connection with the connecting piece when the projection is arranged on the lower mold of the quick mold clamping device of the present invention;
Fig. 4 is a structural schematic diagram of the connection with the connecting piece when a first slot is formed in the lower mold of the quick mold clamping device of the present invention;
Fig. 5 is a structural schematic diagram when projections are arranged on upper and lower molds of the quick mold clamping device of the present invention;
Fig. 6 is a structural schematic diagram when slots are formed in the upper and lower molds of the quick mold clamping device of the present invention;
Fig. 7 is an exploded structure diagram of Fig. 3;
Fig. 8 is a partial structure diagram of when first connecting edges of the projections in the upper and lower molds of the quick mold clamping device of the present invention are obliquely arranged;
Fig. 9 is a structural schematic diagram of the connection of the upper and lower molds in Fig. 8 with the connecting pieces;
Fig. 10 is a partial structure diagram when second grooves are formed in the upper and lower molds of the quick mold clamping device of the present invention;
Fig. 11 is a structural schematic diagram of the connection of the upper and lower molds in Fig. 10 with the connecting pieces;
Fig. 12 is a partial structure diagram when the second grooves and the projections formed in the upper and lower molds of the quick mold clamping device of the present invention are integrally arranged;
Fig. 13 is a structural schematic diagram of the connection of the upper and lower molds in Fig. 12 with the connecting pieces; and
Fig. 14 is a structural schematic diagram of a U-shaped plate which is provided with a second slot in a second connecting edge 7 of the U-shaped plate in the connecting piece of the quick mold clamping device of the present invention;

### Reference signs in the drawings:

1. base, 2. cross beam, 3. first hot plate, 4. lower mold, 5. upper mold, 6. second hot plate, 7. connecting piece, 701. substrate, 702. U-shaped plate, 7021. first connecting edge, 7022. second connecting edge, 7023. second slot, 703. connecting plate, 8. first groove, 801. first connecting groove, 802. second connecting groove, 9. projection, 901. first connecting surface, 902. second connecting surface, 10. first slot, 11. first thermal insulation pad, 12. second thermal insulation pad, 13. second groove.

### Detailed Description of the Embodiments

Preferred embodiments of the present invention will be illustrated below in detail in combination with the drawings.

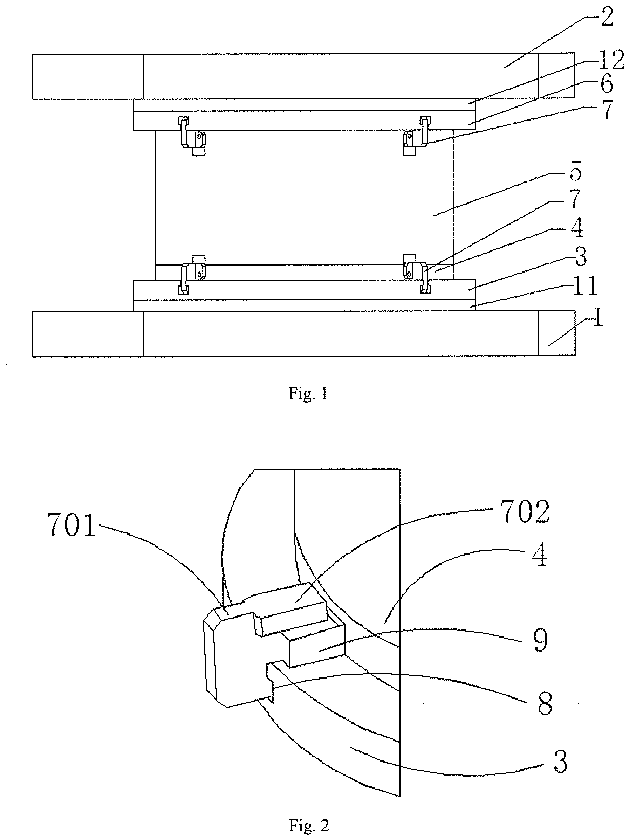

In order to achieve the objective of the present invention, in some embodiments, as shown in Figs. 1 to 2, the quick mold clamping device of the present invention includes a base 1 and a cross beam 2, wherein a first hot plate 3, a lower mold 4, an upper mold 5 and a second hot plate 6 are arranged successively between the base 1 and the cross beam 2; the lower mold 4 is connected with the first hot plate 3, and the upper mold 5 is connected with the second hot plate 6, both by connecting pieces 7; the plurality of connecting pieces 7 are arranged along the outer circumferences of the lower mold 4 and the first hot plate 3 as well as the upper mold 5 and the second hot plate 6; the upper and lower molds 5, 4 are buckled to form a cavity; the connecting pieces 7 include substrates 701 and U-shaped plates 702 connected with the substrates; the upper and lower molds 5, 4 are connected with the connecting pieces through the U-shaped plates 702; and the first and second hot plates 3, 6 are both provided with first grooves 8, in which the substrates 701 are clamped. According to the quick mold clamping device of the present invention, the upper and lower molds are arranged between the first and second hot plates, the hot plates can be connected with the upper and lower molds in a simple insertion manner, and specifically, the first and second hot plates are connected with the upper and lower molds through the grooves and the connecting pieces to drive the mold to realize tire vulcanization. The operation is simple, and the working efficiency is high. The structure is simple and reliable, greater mold gravity can be carried, no external force needs to be continuously applied after the clamping, and thus the connection between the molds and the hot plates is stable and reliable.

In order to further optimize the implementation effects of the present invention, a first thermal insulation pad 11 is further arranged between the first hot plate 3 and the base 2, and a second thermal insulation pad 12 is further arranged between the second hot plate 6 and the cross beam 2. Due to the arrangement of the thermal insulation pads, the outward conduction of the heat of the hot plates is avoided, and the heat is basically used for heating the mold.

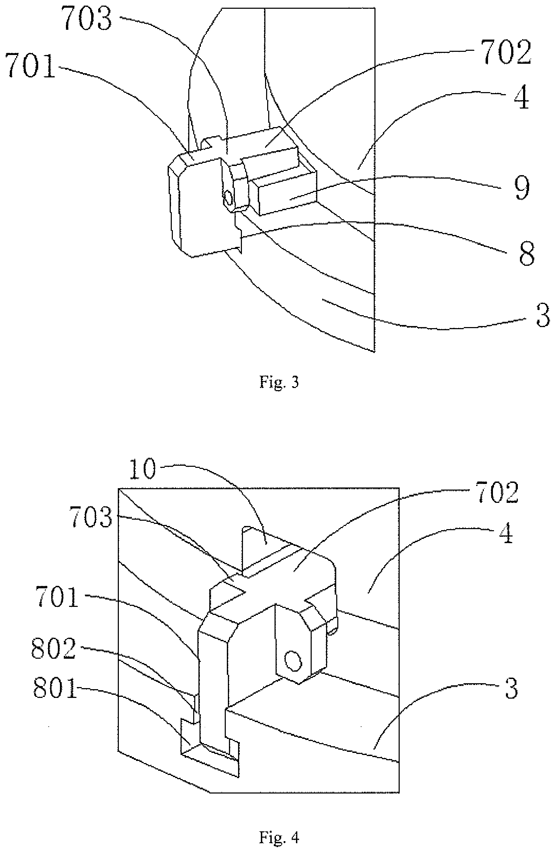

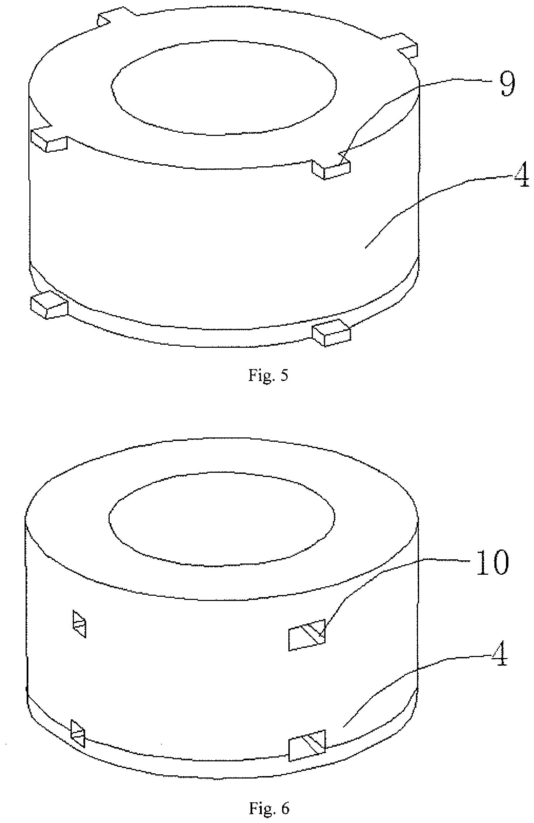

In order to achieve the objective of the present invention, in some other embodiments, as shown in Figs. 3 to 6, connecting plates 703 are further arranged between the substrates 701 and the U-shaped plates 702. Due to the arrangement of the connecting plates, fasteners can be installed conveniently, so that the whole structure is firmer.

In order to further optimize the implementation effects of the present invention, the first groove 8 is a T-shaped groove, the T-shaped groove includes a first connecting groove 801 at the bottom, and a second connecting groove 802 communicated with the first connecting groove is formed in the first connecting groove 801. Since the first groove is the T-shaped groove, the connecting pieces are easy to install, and the connecting plates are clamped in the second connecting grooves after clamping, thereby ensuring easy installation and also firm connection.

In order to further optimize the implementation effects of the present invention, projections 9 or slots 10 matched with the structures of the U-shaped plates 702 are arranged on the upper and lower molds 5, 4, and the upper and lower molds 5, 4 are connected with the U-shaped plates 702 through the projections 9 or slots 10. A suitable manner can be selected according to need to connect the upper and lower molds with the U-shaped plates, and the upper and lower molds are firmly connected with the U-shaped plates by the structures matched with the U-shaped plates.

In order to further optimize the implementation effects of the present invention, when the projections 9 are arranged on the upper and lower molds 5, 4, the projections 9 are clamped in the U-shaped plates 702.

In order to further optimize the implementation effects of the present invention, when the first slots 10 are formed in the upper and lower molds 5, 4, the U-shaped plates 702 are clamped in the first slots 10.

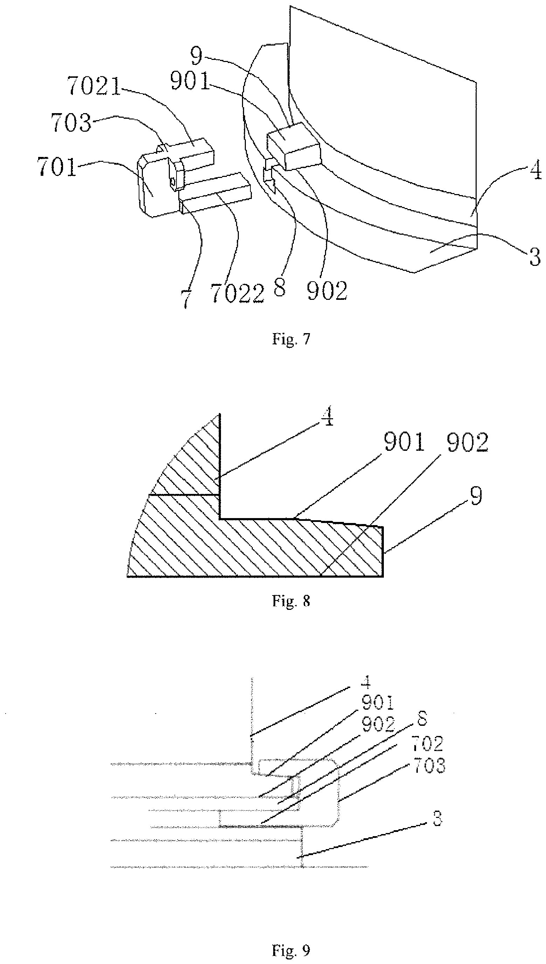

In order to further optimize the implementation effects of the present invention, as shown in Fig. 7, the projections 9 include first connecting surfaces 901 and second connecting surfaces 902 arranged below the first connecting surfaces, the U-shaped plates 702 include first connecting edges 7021 and second connecting edges 7022, the first connecting edges 7021 are arranged above the first connecting surfaces 901, and the second connecting edges 7022 are arranged below the second connecting surfaces 902. As shown in Figs. 4 and 7, the direction that the second connecting edges 7022 are inserted into the first connecting grooves 801 is used as the length direction of the connecting pieces 7, and the direction vertical to the length direction of the connecting pieces 7 in the horizontal direction is used as the width direction of the connecting pieces 7, the vertical direction is used as the thickness direction of the connecting pieces 7, the first connecting edges 7021 are of horizontal flat structures, the thicknesses of the first connecting edges 7021 are smaller than their widths, the second connecting edges 7022 are of horizontal flat structures as well, and the thicknesses of the second connecting edges 7022 are smaller than their widths; the substrates 701 are of vertical flat structures, the widths of the substrates 701 are matched with the widths of the second connecting grooves 802, and the lengths of the substrates 701 are greater than their widths. Due to the structures of the first connecting edges 7021 and the second connecting edges 7022, the connecting pieces 7 are better fit to the hot plates (the first hot plate 3 and the second hot plate 6) and the molds (the lower mold 4 and the upper mold 5), to prevent the swing among the hot plates, the molds and the connecting pieces 7, and the connecting pieces 7 can bear greater bending moments due to the structures of the substrates 701, so as to carry greater mold weights and improve the connection reliability.

In order to further optimize the implementation effects of the present invention, as shown in Figs. 8 to 9, the first connecting surfaces 901 are obliquely arranged. Since the first connecting surfaces are obliquely arranged to facilitate entrance of the U-shaped plates, the installation and disassembly are easier.

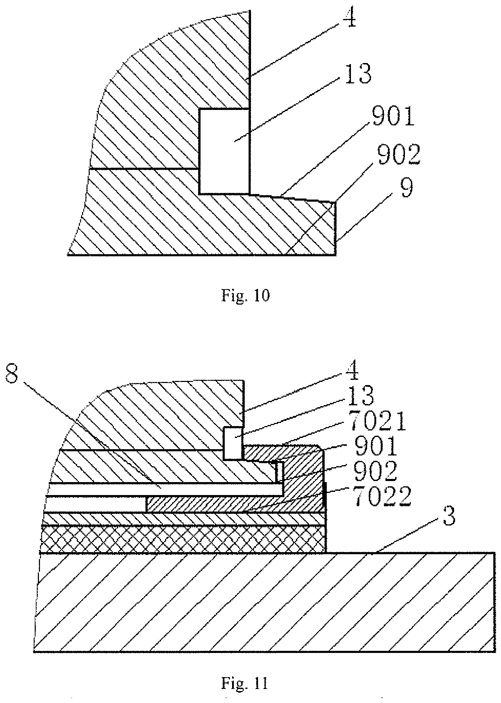

In order to further optimize the implementation effects of the present invention, as shown in Figs. 10 to 11, second grooves 13 are further formed in the upper and lower molds 4, 5, and the second grooves 13 are arranged above the projections 9 and are connected with the projections 9 through the first connecting surfaces 901. As the second grooves are formed, when the clamping positions of the U-shaped plates are invariable, the first connecting edges enter the second grooves, so that the same U-shaped plates can adapt to molds with greater diameter.

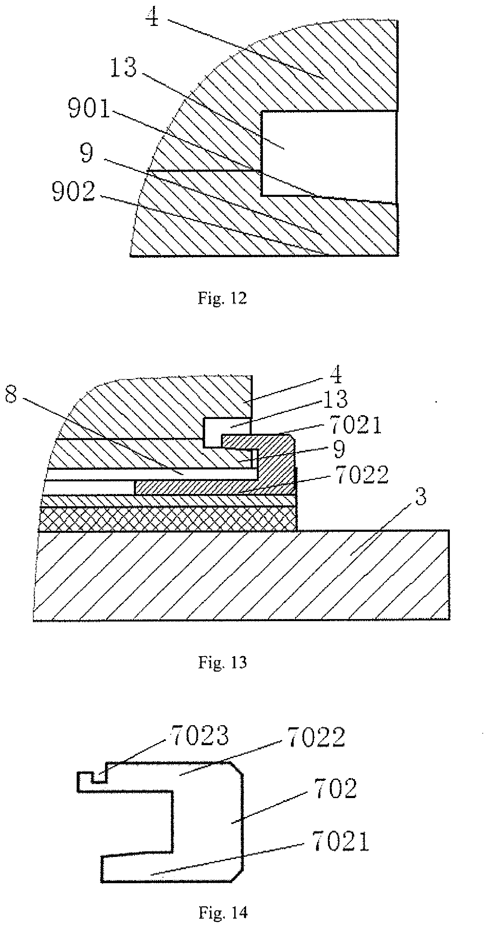

In order to further optimize the implementation effects of the present invention, as shown in Figs. 12 to 13, the second grooves 13 and the projections 9 are integrally arranged. By means of the arrangement, the structure is simpler to meet the requirement of molds with different sizes.

In order to further optimize the implementation effects of the present invention, as shown in Fig. 14, the connecting edges in the second grooves 13 connected with the first connecting surfaces 901 are obliquely arranged. As the connecting edges connected with the first connecting surfaces are obliquely arranged, the first connecting edges can be inserted into the second grooves easily the installation and disassembly are easier.

In order to further optimize the implementation effects of the present invention, second slots 7023 are formed in the second connecting edges 7022, the quick mold clamping device further includes a driving device, the driving device is clamped with the second slots 7023, the lengths that the second connecting edges 7022 can be inserted into the first connecting grooves 802 are greater than the lengths that the first connecting edges 7021 can be lapped on the projections 9, and the driving device drives the second connecting edges 7022 to move in the first connecting grooves 802 while causing the first connecting edges 7021 to be lapped on or separated from the projections 9. As the second slots are formed in the second connecting edges, the driving device can be conveniently clamped with the second slots when being installed, so that the connection is firmer. In this way, the connecting pieces 7 can be always connected to the first hot plate 3 or the second hot plate 6; as the driving device is clamped with the second slots 7023, the second connecting edges 7022 move in the first connecting grooves 802; to install or disassemble the mold, the driving device drives the connecting pieces 7 to move outward, so that the first connecting edges 7021 are separated from the projections 9; and during mold clamping, after the mold is placed, the driving device drives the connecting pieces 7 to move toward the inner side so as to realize automatic and stable mold clamping.

Described above are only preferred embodiments of the present invention, and it should be noted that those of ordinary skill in the art can also make various modifications and improvements without departing from the inventive concept of the present invention, and all of these modifications and improvements shall be encompassed within the protection scope of the present invention.

## Claims

1. A quick mold clamping device, comprising a base and a cross beam, wherein a first hot plate, a lower mold, an upper mold and a second hot plate are arranged successively between the base and the cross beam; the lower mold is connected with the first hot plate, and the upper mold is connected with the second hot plate, both by connecting pieces; the connecting pieces comprise substrates and U-shaped plates connected with the substrates; the upper and lower molds are connected with the connecting pieces through the U-shaped plates; and the first and second hot plates are both provided with first grooves, in which the substrates are clamped.

2. The quick mold clamping device of claim 1, wherein the first grooves are T-shaped grooves, the T-shaped grooves comprise first connecting grooves at the bottom, and second connecting grooves communicated with the first connecting grooves are formed in the first connecting grooves.

3. The quick mold clamping device of claim 1, wherein projections or first slots matched with the structures of the U-shaped plates are arranged on the upper and lower molds, and the projections are clamped in the U-shaped plates or the U-shaped plates are clamped in the first slots.

4. The quick mold clamping device of claim 3, wherein the projections comprise first connecting surfaces and second connecting surfaces arranged below the first connecting surfaces, the U-shaped plates comprise first connecting edges and second connecting edges, the first connecting edges are arranged above the first connecting surfaces, and the second connecting edges are arranged below the second connecting surfaces.

5. The quick mold clamping device of claim 4, wherein the first connecting surfaces are obliquely arranged.

6. The quick mold clamping device of claim 5, wherein second grooves are further formed in the upper and lower molds, and the second grooves are arranged above the projections and are connected with the projections through the first connecting surfaces.

7. The quick mold clamping device of claim 6, wherein the connecting edges in the second grooves connected with the first connecting surfaces are obliquely arranged.

8. The quick mold clamping device of any one of claims 4-7, wherein second slots are formed in the second connecting edges.

9. The quick mold clamping device of any one of claims 1-7, wherein connecting plates are further arranged between the substrates and the U-shaped plates.

10. The quick mold clamping device of any one of claims 1-7, wherein a first thermal insulation pad is further arranged between the first hot plate and the base, and a second thermal insulation pad is further arranged between the second hot plate and the cross beam.
